# EUROPEAN PATENT APPLICATION

(11) **EP 3 866 053 A1**
(43) Date of publication of application: **18.08.2021**
(21) Application number: 19880660.6
(22) Date of filing: 21.09.2019
(51) Int. Cl.: G06K 9/00

(54) **FINGERPRINT IMAGE PROCESSING METHOD AND RELATED PRODUCT**

(30) Priority: 30.10.2018 CN 201811283339; 30.10.2018 CN 201821786968 U
(71) Applicant: GUANGDONG OPPO MOBILE TELECOMMUNICATIONS CORP., LTD., Dongguan, Guangdong 523860 (CN)
(72) Inventor: WU, Anping, Dongguan, Guangdong 523860 (CN)
(74) Representative: Mewburn Ellis LLP
(86) International application number: PCT/CN2019/107148
(87) International publication number: WO 2020/088143

(57) **Abstract**

A method for fingerprint image processing and related products are provided. The method includes the following. A second region of a screen and an effective collection region of an under-screen fingerprint module are determined (S101) in response to a fingerprint collection instruction. The second region of the screen is lit up (S102), where emitted lights of the second region are associated with first optical noise, second optical noise, and first lights, where the first optical noise includes reflected lights, the reflected lights are lights reflected by the second lights from the screen, and the second lights are part of the emitted lights travelling along a positive direction of a Z axis of the screen, where the second optical noise includes direct lights, and the direct lights are part of the emitted lights travelling along a negative direction of the Z axis of the screen, where the first lights are emitted lights reflected by a fingerprint of a user. A fingerprint image is obtained (S103) by collecting and processing the first lights in the effective collection region. By adopting technical solutions of the disclosure, influence of optical noises on obtaining of the fingerprint image can be reduced, thereby improving accuracy and a processing speed of the fingerprint image.

## Description

### TECHNICAL FIELD

This disclosure relates to the technical field of electronic devices, and particularly to a method for fingerprint image processing and related products.

### BACKGROUND

In under-screen fingerprint module-based fingerprint collection, lights emitted by a screen illuminate a finger placed on the screen to be reflected by the finger after reaching the finger. An optical fingerprint module disposed under the screen can receive a reflected light signal to form a fingerprint image.

At present, a fingerprint image obtained may have uneven brightness due to different light absorption rates of convex and concave portions of a fingerprint (i.e., ridges and valleys of the fingerprint). The quality of a fingerprint image collected by the optical fingerprint module is affected by optical noises, which in turn affects subsequent processing and matching of the fingerprint image.

### SUMMARY

According to implementations of the disclosure, a method for fingerprint image processing and related products are provided, which can reduce influence of optical noises on obtaining of a fingerprint image, thereby improving accuracy and a processing speed of the fingerprint image.

In a first aspect of the disclosure, a method for fingerprint image processing is provided. The method is for an electronic device. The electronic device includes a screen and an under-screen fingerprint module disposed under a first region of the screen. The method includes the following. A second region of the screen and an effective collection region of the under-screen fingerprint module are determined in response to a fingerprint collection instruction, where the second region includes at least one of an annular region, a non-annular separated region, and a plurality of separated regions, where the effective collection region is a collection region which corresponds to an unlit display region surrounded by an inner edge of the annular region, the effective collection region is a collection region which corresponds to a region of the screen other than the non-annular separated region, or the effective collection region is a collection region which corresponds to an unlit display region between at least two separated regions among the plurality of separated regions. The second region of the screen is lit up, where emitted lights of the second region are associated with first optical noise, second optical noise, and first lights, where the first optical noise includes reflected lights, the reflected lights are lights reflected by the second lights from the screen, and the second lights are part of the emitted lights travelling along a positive direction of a Z axis of the screen, where the second optical noise includes direct lights, and the direct lights are part of the emitted lights travelling along a negative direction of the Z axis of the screen, where the first lights are emitted lights reflected by a fingerprint of a user. A fingerprint image is obtained by collecting and processing the first lights in the effective collection region.

In a second aspect of the disclosure, a device for fingerprint image processing is provided. The device is for an electronic device. The electronic device includes a screen and an under-screen fingerprint module disposed under a first region of the screen. The device for fingerprint image processing includes a determining unit, a lighting-up unit, and a processing unit. The determining unit is configured to determine a second region of the screen and an effective collection region of the under-screen fingerprint module in response to a fingerprint collection instruction, where the second region includes at least one of an annular region, a non-annular separated region, and a plurality of separated regions, where the effective collection region is a collection region which corresponds to an unlit display region surrounded by an inner edge of the annular region, the effective collection region is a collection region which corresponds to a region of the screen other than the non-annular separated region, or the effective collection region is a collection region which corresponds to an unlit display region between at least two separated regions among the plurality of separated regions. The lighting-up unit is configured to light up the second region of the screen, where emitted lights of the second region are associated with first optical noise, second optical noise, and first lights, where the first optical noise includes reflected lights, the reflected lights are lights reflected by the second lights from the screen, and the second lights are part of the emitted lights travelling along a positive direction of a Z axis of the screen, where the second optical noise includes direct lights, and the direct lights are part of the emitted lights travelling along a negative direction of the Z axis of the screen, where the first lights are emitted lights reflected by a fingerprint of a user. The processing unit is configured to obtain a fingerprint image by collecting and processing the first lights in the effective collection region.

In a third aspect of the disclosure, an electronic device is provided. The electronic device includes a processor, a memory, and one or more programs. The one or more programs are stored in the memory and configured to be executed by the processor. The programs include instructions which are operable with the processor to execute the operations of the method in the first aspect of the disclosure.

In a fourth aspect of the disclosure, a computer-readable storage medium is provided. The computer-readable storage medium stores a computer program for electronic data interchange. The computer program includes instructions which are operable to execute part or all of the operations of the method in the first aspect of the disclosure.

In a fifth aspect of the disclosure, a computer program product is provided. The computer program product includes a non-transitory computer-readable storage medium configured to store a computer program. The computer program is operable with a computer to execute part or all of the operations of the method in the first aspect of the disclosure. The computer program product may be a software installation package.

In implementations of the disclosure, the electronic device determines a second region of the screen and an effective collection region of the under-screen fingerprint module in response to a fingerprint collection instruction. Then the electronic device lights up the second region of the screen, where emitted lights of the second region are associated with first optical noise, second optical noise, and first lights, where the first optical noise includes reflected lights, the reflected lights are lights reflected by the second lights from the screen, and the second lights are part of the emitted lights travelling along a positive direction of a Z axis of the screen, where the second optical noise includes direct lights, and the direct lights are part of the emitted lights travelling along a negative direction of the Z axis of the screen, where the first lights are emitted lights reflected by a fingerprint of a user. The electronic device obtains a fingerprint image by collecting and processing the first lights in the effective collection region. As can be seen, the electronic device lights up only the second region, not a region of the screen corresponding to the effective collection region of the fingerprint module, which can effectively avoid influence of the first optical noise and the second optical noise on the fingerprint image when the fingerprint module collects the fingerprint image. In addition, only the first lights reflected to the effective collection region by the fingerprint are collected, which is beneficial to improving the accuracy of the fingerprint image. Furthermore, the fingerprint image can be obtained directly after the first lights are obtained, without optical noise filtering, which is beneficial to increasing a speed of obtaining of the fingerprint image.

### BRIEF DESCRIPTION OF THE DRAWINGS

In order to describe technical solutions of implementations or the related art more clearly, the following will give a brief description of accompanying drawings used for describing the implementations or the related art. Apparently, accompanying drawings described below are merely some implementations. Those of ordinary skill in the art can also obtain other accompanying drawings based on the accompanying drawings described below without creative efforts.

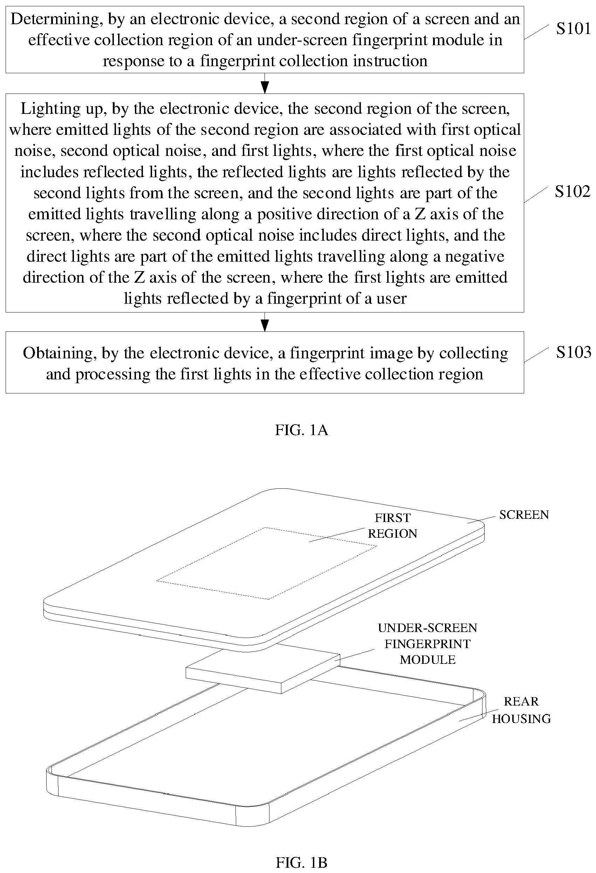

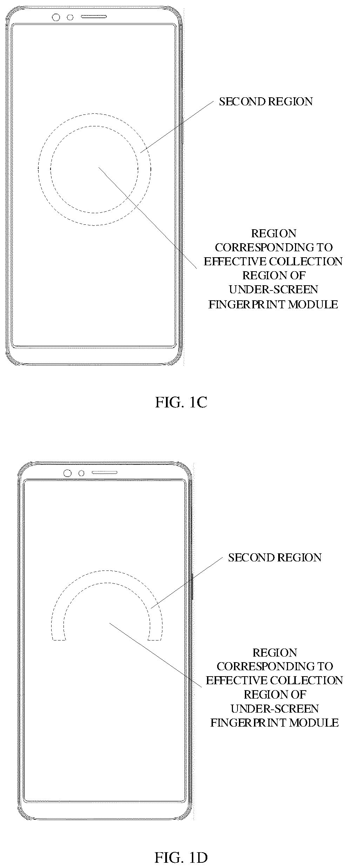

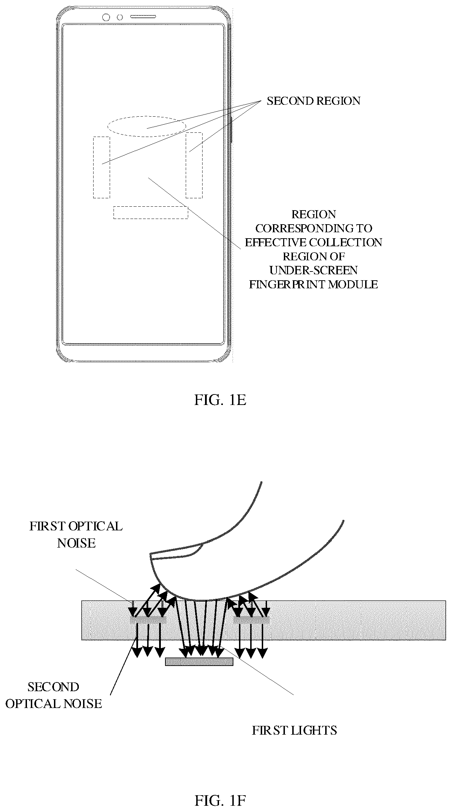

FIG. 1A is a schematic flowchart illustrating a method for fingerprint image processing according to implementations.
FIG. IB is a schematic diagram illustrating an under-screen fingerprint module according to implementations.
FIG. 1C is a schematic diagram illustrating a second region and an effective collection region of the under-screen fingerprint module according to implementations.
FIG. ID is a schematic diagram illustrating a second region and an effective collection region of the under-screen fingerprint module according to other implementations.
FIG. IE is a schematic diagram illustrating a second region and an effective collection region of the under-screen fingerprint module according to other implementations.
FIG. IF is a schematic diagram illustrating emitted lights of a second region according to implementations.
FIG. 1G is a schematic diagram illustrating a position relationship among a first contact region, a first screen reference region, and a second region according to implementations.
FIG. 2 is a schematic flowchart illustrating a method for fingerprint image processing according to other implementations.
FIG. 3 is a schematic flowchart illustrating a method for fingerprint image processing according to other implementations.
FIG. 4 is a schematic structural diagram illustrating an electronic device according to implementations.
FIG. 5 is a block diagram illustrating functional units of a device for fingerprint image processing according to implementations.
FIG. 6 is a schematic structural diagram illustrating a smart phone according to implementations.
FIG. 7 is a schematic structural diagram illustrating an electronic device 700 according to implementations.

### DETAILED DESCRIPTION

In order for those skilled in the art to better understand technical solutions of implementations of the disclosure, the technical solutions of the implementations will be described clearly and completely with reference to accompanying drawings in the implementations. Apparently, implementations described hereinafter are merely some implementations, rather than all implementations of the disclosure. All other implementations obtained by those of ordinary skill in the art based on the implementations without creative efforts shall fall within the protection scope of the disclosure.

The terms "first", "second", and the like used in the specification, the claims, and the accompany drawings of the disclosure are used to distinguish different objects rather than describe a particular order. The terms "include", "comprise", and "have" as well as variations thereof are intended to cover non-exclusive inclusion. For example, a process, method, system, product, or device including a series of steps or units is not limited to listed steps or units, on the contrary, it can optionally include other steps or units that are not listed; alternatively, other steps or units inherent to the process, method, product, or device can be included either.

The term "implementation" referred to herein means that particular features, structures, or properties described in conjunction with the implementations may be defined in at least one implementation of the disclosure. The phrase "implementation" appearing in various places in the specification does not necessarily refer to the same implementation or an independent/ alternative implementation that is mutually exclusive with other implementations. Those skilled in the art will understand expressly and implicitly that an implementation described herein may be combined with other implementations.

"Electronic device" in implementations of the disclosure may include various handheld devices with wireless communication functions, on-board devices, wearable devices, computing devices, or other processing devices connected to a wireless modem, as well as various forms of user equipment (UE), mobile stations (MS), terminal devices, etc. For convenience of description, the above-mentioned devices are collectively referred to as electronic devices. Hereinafter, implementations of the disclosure will be described in detail.

FIG. 1A is a schematic flowchart illustrating a method for fingerprint image processing according to implementations. The method is for an electronic device. The electronic device includes a screen and an under-screen fingerprint module (i.e., under-screen fingerprint assembly) disposed under a first region of the screen. As illustrated in FIG. 1A, the method for fingerprint image processing includes the following.

At block S101, when the electronic device receives a fingerprint collection instruction, the electronic device determines a second region of the screen to be lit-up (i.e., activated) and an effective collection region of the under-screen fingerprint module.

The under-screen fingerprint module is disposed between the first region of the screen and a rear housing of the electronic device, as illustrated in FIG. IB. The first region may be in various shapes, for example, an ellipse, a rectangle, etc, and the size of the first region is less than or equal to that of the screen, which are not limited in the disclosure.

The fingerprint collection instruction herein may be that a finger presses the screen when the screen is in a screen-off state, or may be a fingerprint payment instruction when the screen is in a screen-on state, etc., which is not limited in the disclosure.

The second region does not overlap the effective collection region of the under-screen fingerprint module. Lights emitted by the lit-up second region (hereinafter, emitted lights of the second region) includes lights that can reach a user's finger, which will be reflected by the user's finger to the effective collection region of the under-screen fingerprint module, to allow the under-screen fingerprint module to collect a fingerprint image. The second region includes at least one of an annular region, a non-annular separated region, and multiple separated regions. The effective collection region corresponds to an unlit display region surrounded by an inner edge of the annular region, as illustrated in FIG. 1C. The effective collection region corresponds to a region of the screen other than the non-annular separated region, as illustrated in FIG. ID. The effective collection region corresponds to an unlit display region between at least two separated regions among the multiple separated regions, as illustrated in FIG. IE.

At block S 102, the electronic device lights up the second region of the screen, where emitted lights of the second region are associated with first optical noise, second optical noise, and first lights, where the first optical noise includes reflected lights, the reflected lights are lights reflected by the second lights from the screen, and the second lights are part of the emitted lights travelling along a positive direction of a Z axis of the screen, where the second optical noise includes direct lights, and the direct lights are part of the emitted lights travelling along a negative direction of the Z axis of the screen, where the first lights are emitted lights reflected by a fingerprint of a user.

A region of the screen above the effective collection region of the under-screen fingerprint module is in the screen-off state.

The first optical noise includes reflected lights which are part of the emitted lights of the second region travelling along the positive direction of the Z axis of the screen and reflected by the screen. In other words, the first optical noise includes lights travelling along the negative direction of the Z axis of the screen, that is, downward lights of the second region which are perpendicular to the screen. Since the second region does not overlap the effective collection region of the under-screen fingerprint module, the first optical noise will not be collected and will not affect collection of the fingerprint image. In this way, the first optical noise can be eliminated.

The second optical noise includes direct lights which are part of the emitted lights of the second region travelling along the negative direction of the Z axis of the screen, and the direct lights are also downward lights of the second region which are perpendicular to the screen. Therefore, based on the same reason as the first optical noise, the second optical noise can be eliminated. As illustrated in FIG. IF, the first optical noise, the second optical noise, and the first lights are illustrated.

At block SI03, the electronic device obtains a fingerprint image by collecting and processing the first lights in the effective collection region.

In implementations of the disclosure, the electronic device determines a second region of the screen to be lit-up and an effective collection region of the under-screen fingerprint module upon reception of a fingerprint collection instruction. Then the electronic device lights up the second region of the screen, where emitted lights of the second region are associated with first optical noise, second optical noise, and first lights, where the first optical noise includes reflected lights, the reflected lights are lights reflected by the second lights from the screen, and the second lights are part of the emitted lights travelling along a positive direction of a Z axis of the screen, where the second optical noise includes direct lights, and the direct lights are part of the emitted lights travelling along a negative direction of the Z axis of the screen, where the first lights are emitted lights reflected by a fingerprint of a user. The electronic device obtains a fingerprint image by collecting and processing the first lights in the effective collection region. As can be seen, the electronic device lights up only the second region, rather than a region of the screen corresponding to the effective collection region of the fingerprint module, which can effectively avoid influence of the first optical noise and the second optical noise on the fingerprint image when the fingerprint module collects the fingerprint image. In addition, only the first lights reflected to the effective collection region by the fingerprint are collected, which is beneficial to improving accuracy of the fingerprint image. Furthermore, the fingerprint image can be obtained directly after the first lights are obtained, without optical noise filtering, which is beneficial to increasing a speed of obtaining of the fingerprint image.

In some implementations, the second region of the screen to be lit-up and the effective collection region of the under-screen fingerprint module are determined as follows. A first contact region where a finger of the user contacts the screen is obtained. A collection region which corresponds to a first screen reference region including the first contact region is determined as the effective collection region of the under-screen fingerprint module. An annular region of the screen which surrounds a region including the first screen reference region is determined as the second region, where an inner edge of the annular region encloses a surrounded region.

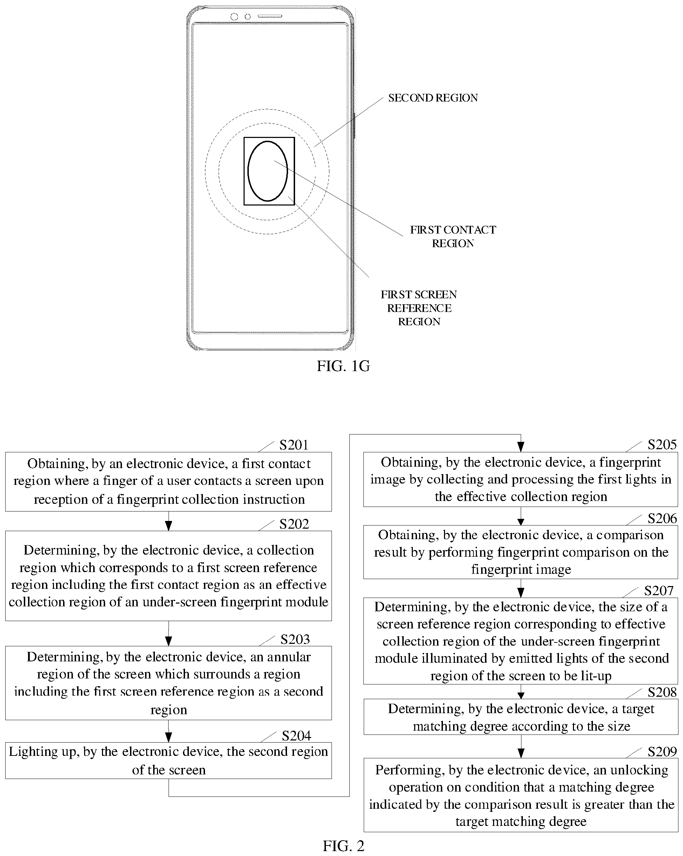

An area of the first screen reference region including the first contact region is greater than or equal to that of the first contact region, and the area of the first screen reference region is less than a first preset area threshold. If the area of the first screen reference region is greater than the first preset area threshold, this will cause the second region to be far from the finger of the user. In this case, the emitted lights of the second region are unable to reach the finger to form a fingerprint image. For the same reason, an area of the surrounded region should be greater than or equal to that of the first screen reference region and less than a second preset area threshold. A position relationship among the first contact region, the first screen reference region, and the second region are illustrated in FIG. 1G.

The first preset area threshold and the second preset area threshold are values determined based on experience, and may be set by the technical developer according to multiple verified data before the electronic device leaves the factory, which are not limited in the disclosure.

As can be seen, in implementations of the disclosure, the electronic device can determine, according to the first contact region where the finger of the user contacts the screen, the effective collection region of the under-screen fingerprint module and the second region, which is conductive to improving accuracy of region determination. Moreover, the second region is designed to be circular, which is beneficial to improving integrity of the obtained fingerprint image.

In some implementations, the second region of the screen to be lit-up and the effective collection region of the under-screen fingerprint module are determined as follows. A second contact region where a finger of the user contacts the screen is obtained. A collection region which corresponds to a second screen reference region including the second contact region is determined as the effective collection region of the under-screen fingerprint module. A non-annular separated region of the screen other than the second screen reference region is determined as the second region, where emitted lights of the non-annular separated region include lights illuminating the second contact region.

The non-annular separated region may be a half ring, a three-quarter ring, a half rectangle, or the like, which is not limited in the disclosure. The second screen reference region is designed in a same manner as the first screen reference region.

The specific implementation manners of determining the non-annular separated region of the screen other than the second screen reference region as the second region may be various. As an example, an area of a region of the screen to be lit-up is determined according to remaining electric quantity, and the non-annular separated region is determined according to the area of the region of the screen to be lit-up. In order to ensure integrity of the fingerprint image obtained after the non-annular separated region is lit up, under the promise of constant (area) size, the shape of the non-annular separated region should be designed to allow the non-annular separated region to enclose the second contact region as much as possible. In other words, the shape of the non-annular separated region should be designed to allow the emitted lights include as much as possible lights illuminating different positions of the second contact region rather than illuminating only one portion of the second contact region. As another example, the non-annular separated region is determined according to a damage state of the screen. It should be noted that, the manners of determining the non-annular separated region of the screen are not limited in the disclosure.

As can be seen, in implementations of the disclosure, the electronic device can determine, according to the second contact region where the finger of the user contacts the screen, the effective collection region of the under-screen fingerprint module and the second region, which is conductive to increasing diversity of the second region. In addition, the second region is designed to be a non-annular separated region, which can reduce power consumption compared to an annular region.

In some implementations, the second region of the screen to be lit-up and the effective collection region of the under-screen fingerprint module are determined as follows. A third contact region where a finger of the user contacts the screen is obtained. A collection region which corresponds to a third screen reference region including the third contact region is determined as the effective collection region of the under-screen fingerprint module. A maximum reference region of the screen to be lit-up is determined according to the third contact region. Multiple separated regions in the maximum reference region are determined as the second region, where emitted lights of each of the multiple separated regions include lights illuminating the third contact region.

The multiple separated regions may have the same or different shapes. Any separated region can be, for example, a rectangle, a triangle, a circle, and so on, which is not limited in the disclosure. The third screen reference region is designed in a same manner as the first screen reference region.

The maximum reference region is a maximum region that can be determined as the second region. That is, emitted lights of a region of the screen other than the maximum reference region and the third screen reference region do not include lights illuminating the third contact region. The maximum reference region of the screen to be lit-up can be determined according to the third contact region in various manners. As an example, the maximum reference region is determined according to the position of the third contact region and a preset position relationship between the position of the third contact region and the maximum reference region, or determined according to a mapping relationship between an area of the third contact region and an area of the maximum reference region, which is not limited in the disclosure.

When the electronic device determines the multiple separated regions in the maximum reference region as the second region, distributions and shapes of the multiple separated regions are random each time, which can increase diversity of the determined regions.

As can be seen, in implementations of the disclosure, the electronic device can determine, according to the third contact region where the finger of the user contacts the screen, the effective collection region of the under-screen fingerprint module and the second region, which is beneficial to determining the effective collection region and the second region accurately. In addition, the second region is designed to be multiple separated regions, which is beneficial to increasing diversity of the second region and bringing more entertainment to the user.

In some implementations, after obtaining the fingerprint image by collecting and processing the first lights in the effective collection region, the method further includes the following. A comparison result is obtained by performing fingerprint comparison on the fingerprint image. An unlocking operation is performed on condition that the comparison result indicates that the fingerprint image matches. Skip performing of the unlocking operation on condition that the comparison result indicates that the fingerprint image does not match.

As an example, during fingerprint comparison, if a matching degree between a fingerprint image and a preset fingerprint image is less than a preset matching-degree threshold, it is determined that the fingerprint image does not match. If the matching degree is greater than or equal to the preset matching-degree threshold, it is determined that the fingerprint image matches.

As can be seen, in implementations of the disclosure, the electronic device can perform fingerprint comparison on the fingerprint image and perform the unlocking operation when the comparison result indicates that the fingerprint image matches, which is beneficial to improving security of the electronic device.

In some implementations, the unlocking operation is performed on condition that the comparison result indicates that the fingerprint image matches as follows. The size of a region of a finger of the user illuminated by emitted lights of the second region of the screen to be lit-up is determined. A target matching degree is determined according to the size of the region. The unlocking operation is performed on condition that a matching degree indicated by the comparison result is greater than the target matching degree.

In the case that the second region is an annular region, emitted lights of the second region can illuminate the entire fingerprint region of the finger. In the case that the second region is a non-annular separated region, the emitted lights of the second region can illuminate part of the fingerprint region of the finger. That is, completeness of the obtained fingerprint image varies with the fingerprint region of the finger illuminated by the emitted lights. To this end, for each of different illuminated fingerprint regions, a target matching degree corresponding to the illuminated fingerprint region is determined.

As can be seen, in implementations of the disclosure, the electronic device can determine a target matching degree according to the size of a region of a finger of the user illuminated by emitted lights of the second region, which is beneficial to improving rationality and success rate of fingerprint image matching.

In some implementations, before determining the second region of the screen to be lit-up and the effective collection region of the under-screen fingerprint module upon reception of the fingerprint collection instruction, the method further includes the following. A display state of the screen is detected. The first region is turned off upon detecting that the display state of the screen is a screen-on state.

As can be seen, in implementations of the disclosure, the electronic device can detect a display state of the screen before determining the second region and the effective collection region. If the screen is in a full-screen on state, the first region of the screen (including a region corresponding to the effective collection region) is turned off, which is beneficial to eliminating of influence of the first optical noise and the second optical noise.

Similar to the above implementations described with reference to FIG. 1A, FIG. 2 is a schematic flowchart illustrating a method for fingerprint image processing according to other implementations. The method is applicable to an electronic device. The electronic device includes a screen and an under-screen fingerprint module disposed under a first region of the screen. As illustrated in FIG. 2, the method for fingerprint image processing includes the following.

At block S201, when the electronic device receives a fingerprint collection instruction, the electronic device obtains a first contact region where a finger of a user contacts the screen.

At block S202, the electronic device determines a collection region which corresponds to a first screen reference region including the first contact region as an effective collection region of the under-screen fingerprint module.

At block S203, the electronic device determines an annular region of the screen which surrounds a region including the first screen reference region as a second region, where an inner edge of the annular region encloses a surrounded region.

At block S204, the electronic device lights up the second region of the screen, where emitted lights of the second region are associated with first optical noise, second optical noise, and first lights, where the first optical noise includes reflected lights, the reflected lights are second lights reflected by the screen, and the second lights are part of the emitted lights travelling along a positive direction of a Z axis of the screen, where the second optical noise includes direct lights, and the direct lights are part of the emitted lights travelling along a negative direction of the Z axis of the screen, where the first lights are emitted lights reflected by a fingerprint of the user.

At block S205, the electronic device obtains a fingerprint image by collecting and processing the first lights in the effective collection region.

At block S206, the electronic device obtains a comparison result by performing fingerprint comparison on the fingerprint image.

At block S207, the electronic device determines the (area) size of a region of the finger of the user illuminated by emitted lights of the second region of the screen to be lit-up.

At block S208, the electronic device determines a target matching degree according to the size of the region.

At block S209, the electronic device performs an unlocking operation on condition that a matching degree indicated by the comparison result is greater than the target matching degree.

In implementations of the disclosure, the electronic device determines a second region of the screen to be lit-up and an effective collection region of the under-screen fingerprint module upon reception of a fingerprint collection instruction. Then the electronic device lights up the second region of the screen, where emitted lights of the second region are associated with first optical noise, second optical noise, and first lights, where the first optical noise includes reflected lights, the reflected lights are second lights reflected by the screen, and the second lights are part of the emitted lights travelling along a positive direction of a Z axis of the screen, where the second optical noise includes direct lights, and the direct lights are part of the emitted lights travelling along a negative direction of the Z axis of the screen, where the first lights are emitted lights reflected by a fingerprint of a user. The electronic device obtains a fingerprint image by collecting and processing the first lights in the effective collection region. As can be seen, the electronic device lights up only the second region, not a region of the screen corresponding to the effective collection region of the fingerprint module, which can effectively avoid influence of the first optical noise and the second optical noise on the fingerprint image when the fingerprint module collects the fingerprint image. In addition, only the first lights reflected to the effective collection region by the fingerprint are collected, which is beneficial to improving accuracy of the fingerprint image. Furthermore, the fingerprint image can be obtained directly after the first lights are obtained, without optical noise filtering, which is beneficial to increasing a speed of obtaining of the fingerprint image.

Furthermore, the electronic device can determine, according to the first contact region where the finger of the user contacts the screen, the effective collection region of the under-screen fingerprint module and the second region, which is conductive to improving accuracy of region determination. Moreover, the second region is designed to be circular, which is beneficial to improving integrity of the obtained fingerprint image.

Furthermore, the electronic device can determine a target matching degree according to the size of a region of a finger of the user illuminated by emitted lights of the second region, which is beneficial to improving rationality and success rate of fingerprint image matching.

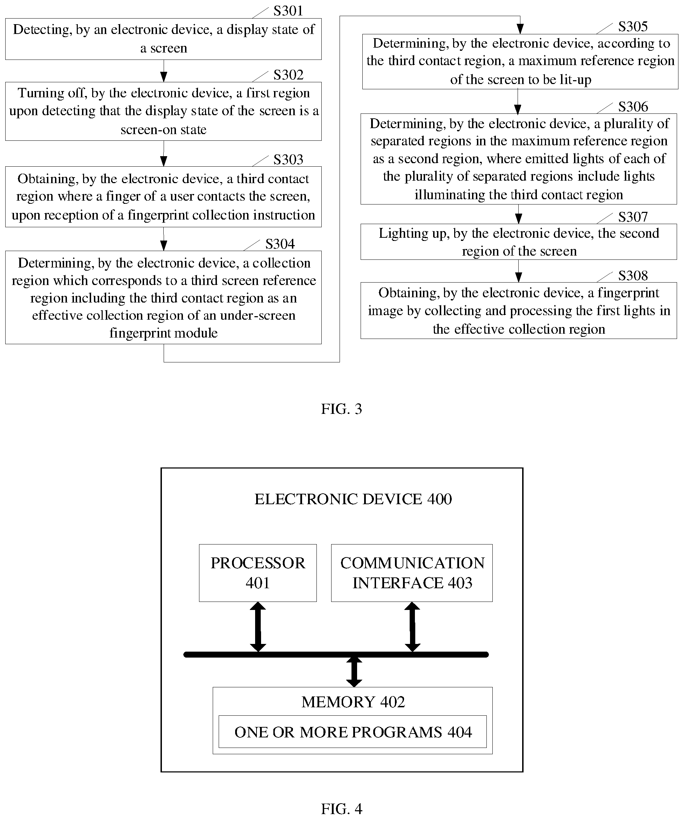

Similar to the above implementations described with reference to FIG. 1A, FIG. 3 is a schematic flowchart illustrating a method for fingerprint image processing according to other implementations. The method is applicable to an electronic device. The electronic device includes a screen and an under-screen fingerprint module disposed under a first region of the screen. As illustrated in FIG. 3, the method for fingerprint image processing includes the following.

At block S301, the electronic device detects a display state of the screen.

At block S302, the electronic device turns off the first region upon detecting that the display state of the screen is a screen-on state.

At block S303, when the electronic device receives a fingerprint collection instruction, the electronic device obtains a third contact region where a finger of a user contacts the screen.

At block S304, the electronic device determines a collection region which corresponds to a third screen reference region including the third contact region as an effective collection region of the under-screen fingerprint module.

At block S305, the electronic device determines, according to the third contact region, a maximum reference region of the screen to be lit-up.

At block S306, the electronic device determines multiple separated regions in the maximum reference region as a second region, where emitted lights of each of the multiple separated regions include lights illuminating the third contact region.

At block S307, the electronic device lights up the second region of the screen, where emitted lights of the second region are associated with first optical noise, second optical noise, and first lights, where the first optical noise includes reflected lights, the reflected lights are second lights reflected by the screen, and the second lights are part of the emitted lights travelling along a positive direction of a Z axis of the screen, where the second optical noise includes direct lights, and the direct lights are part of the emitted lights travelling along a negative direction of the Z axis of the screen, where the first lights are emitted lights reflected by a fingerprint of the user.

At block S308, the electronic device obtains a fingerprint image by collecting and processing the first lights in the effective collection region.

In implementations of the disclosure, the electronic device determines a second region of the screen to be lit-up and an effective collection region of the under-screen fingerprint module upon reception of a fingerprint collection instruction. Then the electronic device lights up the second region of the screen, where emitted lights of the second region are associated with first optical noise, second optical noise, and first lights, where the first optical noise includes reflected lights, the reflected lights are second lights reflected by the screen, and the second lights are part of the emitted lights travelling along a positive direction of a Z axis of the screen, where the second optical noise includes direct lights, and the direct lights are part of the emitted lights travelling along a negative direction of the Z axis of the screen, where the first lights are emitted lights reflected by a fingerprint of a user. The electronic device obtains a fingerprint image by collecting and processing the first lights in the effective collection region. As can be seen, the electronic device lights up only the second region, not a region of the screen corresponding to the effective collection region of the fingerprint module, which can effectively avoid influence of the first optical noise and the second optical noise on the fingerprint image when the fingerprint module collects the fingerprint image. In addition, only the first lights reflected to the effective collection region by the fingerprint are collected, which is beneficial to improving accuracy of the fingerprint image. Furthermore, the fingerprint image can be obtained directly after the first lights are obtained, without optical noise filtering, which is beneficial to increasing a speed of obtaining of the fingerprint image.

Furthermore, the electronic device can determine, according to the third contact region where the finger of the user contacts the screen, the effective collection region of the under-screen fingerprint module and the second region, which is beneficial to determining the effective collection region and the second region accurately. In addition, the second region is designed to be multiple separated regions, which is beneficial to increasing diversity of the second region and bringing more entertainment to the user.

Furthermore, the electronic device can detect a display state of the screen before determining the second region and the effective collection region. If the screen is in a full-screen on state, the first region of the screen (including a region corresponding to the effective collection region) is turned off, which is beneficial to eliminating of influence of the first optical noise and the second optical noise.

Similar to the above implementations described with reference to FIG. 1A, FIG. 2, and FIG. 3, FIG. 4 is a schematic structural diagram illustrating an electronic device according to implementations. The electronic device includes a screen and an under-screen fingerprint module disposed under a first region of the screen. As illustrated in FIG. 4, the electronic device includes a processor 401, a memory 402, a communication interface 403, and one or more programs 404. The programs 404 are stored in the memory 402 and configured to be executed by the processor 401. The programs 404 include instructions which are operable with the processor 401 to execute the following operations.

A second region of the screen to be lit-up and an effective collection region of the under-screen fingerprint module are determined upon reception of a fingerprint collection instruction, where the second region includes at least one of an annular region, a non-annular separated region, and multiple separated regions, where the effective collection region is a collection region which corresponds to an unlit display region surrounded by an inner edge of the annular region, the effective collection region is a collection region which corresponds to a region of the screen other than the non-annular separated region, or the effective collection region is a collection region which corresponds to an unlit display region between at least two separated regions among the multiple separated regions. The second region of the screen is lit up, where emitted lights of the second region are associated with first optical noise, second optical noise, and first lights, where the first optical noise includes reflected lights, the reflected lights are second lights reflected by the screen, and the second lights are part of the emitted lights travelling along a positive direction of a Z axis of the screen, where the second optical noise includes direct lights, and the direct lights are part of the emitted lights travelling along a negative direction of the Z axis of the screen, where the first lights are emitted lights reflected by a fingerprint of a user. A fingerprint image is obtained by collecting and processing the first lights in the effective collection region.

In implementations of the disclosure, the electronic device determines a second region of the screen to be lit-up and an effective collection region of the under-screen fingerprint module upon reception of a fingerprint collection instruction. Then the electronic device lights up the second region of the screen, where emitted lights of the second region are associated with first optical noise, second optical noise, and first lights, where the first optical noise includes reflected lights, the reflected lights are second lights reflected by the screen, and the second lights are part of the emitted lights travelling along a positive direction of a Z axis of the screen, where the second optical noise includes direct lights, and the direct lights are part of the emitted lights travelling along a negative direction of the Z axis of the screen, where the first lights are emitted lights reflected by a fingerprint of a user. The electronic device obtains a fingerprint image by collecting and processing the first lights in the effective collection region. As can be seen, the electronic device lights up only the second region, not a region of the screen corresponding to the effective collection region of the fingerprint module, which can effectively avoid influence of the first optical noise and the second optical noise on the fingerprint image when the fingerprint module collects the fingerprint image. In addition, only the first lights reflected to the effective collection region by the fingerprint are collected, which is beneficial to improving accuracy of the fingerprint image. Furthermore, the fingerprint image can be obtained directly after the first lights are obtained, without optical noise filtering, which is beneficial to increasing a speed of obtaining of the fingerprint image.

In some implementations, the instructions of the programs 404 operable with the processor 401 to determine the second region of the screen to be lit-up and the effective collection region of the under-screen fingerprint module are operable with the processor 401 to: obtain a first contact region where a finger of the user contacts the screen; determine a collection region which corresponds to a first screen reference region including the first contact region as the effective collection region of the under-screen fingerprint module; and determine an annular region of the screen which surrounds a region including the first screen reference region as the second region, where an inner edge of the annular region encloses a surrounded region.

In some implementations, the instructions of the programs 404 operable with the processor 401 to determine the second region of the screen to be lit-up and the effective collection region of the under-screen fingerprint module are operable with the processor 401 to: obtain a second contact region where a finger of the user contacts the screen; determine a collection region which corresponds to a second screen reference region including the second contact region as the effective collection region of the under-screen fingerprint module; and determine a non-annular separated region of the screen other than the second screen reference region as the second region, where emitted lights of the non-annular separated region include lights illuminating the second contact region.

In some implementations, the instructions of the programs 404 operable with the processor 401 to determine the second region of the screen to be lit-up and the effective collection region of the under-screen fingerprint module are operable with the processor 401 to: obtain a third contact region where a finger of the user contacts the screen; determine a collection region which corresponds to a third screen reference region including the third contact region as the effective collection region of the under-screen fingerprint module; determine, according to the third contact region, a maximum reference region of the screen to be lit-up; and determine multiple separated regions in the maximum reference region as the second region, where emitted lights of each of the multiple separated regions include lights illuminating the third contact region.

In some implementations, the instructions of the programs 404 are further operable with the processor 401 to: after obtaining the fingerprint image by collecting and processing the first lights in the effective collection region, obtain a comparison result by performing fingerprint comparison on the fingerprint image, perform an unlocking operation on condition that the comparison result indicates that the fingerprint image matches, and skip performing of the unlocking operation on condition that the comparison result indicates that the fingerprint image does not match.

In some implementations, the instructions of the programs 404 operable with the processor 401 to perform the unlocking operation on condition that the comparison result indicates that the fingerprint image matches are operable with the processor 401 to: determine the size of a region of a finger of the user illuminated by emitted lights of the second region of the screen to be lit-up; determine a target matching degree according to the size of the region; and perform the unlocking operation on condition that a matching degree indicated by the comparison result is greater than the target matching degree.

In some implementations, the instructions of the programs 404 are further operable with the processor 401 to: before determining the second region of the screen to be lit-up and the effective collection region of the under-screen fingerprint module upon reception of the fingerprint collection instruction, detect a display state of the screen, and turn off the first region upon detecting that the display state of the screen is a screen-on state.

The foregoing technical solutions of the implementations of the disclosure are mainly described from the viewpoint of execution of the method. It can be understood that, in order to implement the above functions, the mobile terminal includes hardware structures and/or software modules corresponding to the respective functions. Those skilled in the art should readily recognize that, in combination with the exemplary units and scheme steps or operations described in the implementations disclosed herein, the disclosure can be implemented in hardware or a combination of hardware and computer software. Whether a function is implemented by way of hardware or computer software driving hardware depends on the particular application and design constraints of the technical solution. Those skilled in the art may use different methods to implement the described functions for each particular application, but such implementation should not be considered as beyond the scope of the disclosure.

According to the implementations of the disclosure, functional units may be divided for the mobile terminal in accordance with the foregoing method examples. For example, functional units may be divided according to corresponding functions, and two or more functions may be integrated into one processing unit. The above-mentioned integrated unit can be implemented in the form of hardware or software functional units. It should be noted that the division of units in implementations of the disclosure is schematic and is merely a logical function division; there may be other division manners in actual implementation.

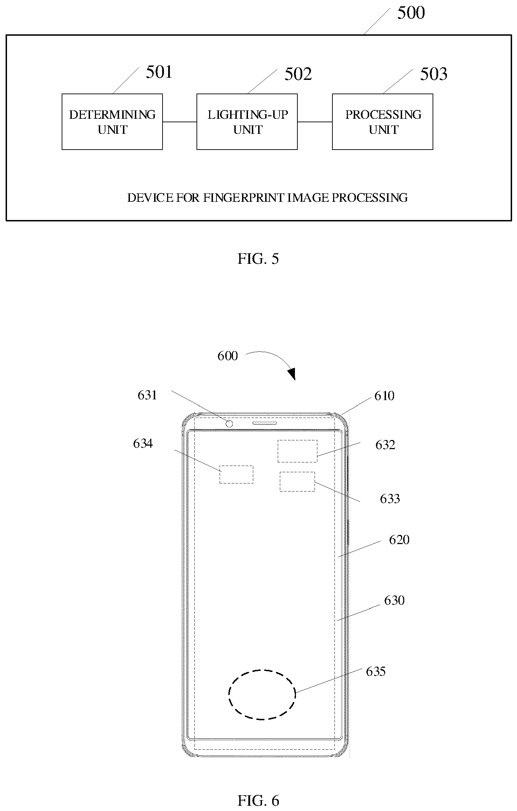

FIG. 5 is a block diagram illustrating functional units of a device 500 for fingerprint image processing according to implementations. The device 500 for fingerprint image processing is applicable to an electronic device. The electronic device includes a screen and an under-screen fingerprint module disposed under a first region of the screen. As illustrated in FIG. 5, the device 500 for fingerprint image processing includes a determining unit 501, a lighting-up unit 502, and a processing unit 503. The determining unit 501 is configured to determine a second region of the screen to be lit-up and an effective collection region of the under-screen fingerprint module upon reception of a fingerprint collection instruction, where the second region includes at least one of an annular region, a non-annular separated region, and multiple separated regions, where the effective collection region is a collection region which corresponds to an unlit display region surrounded by an inner edge of the annular region, the effective collection region is a collection region which corresponds to a region of the screen other than the non-annular separated region, or the effective collection region is a collection region which corresponds to an unlit display region between at least two separated regions among the multiple separated regions. The lighting-up unit 502 is configured to light up the second region of the screen, where emitted lights of the second region are associated with first optical noise, second optical noise, and first lights, where the first optical noise includes reflected lights, the reflected lights are second lights reflected by the screen, and the second lights are part of the emitted lights travelling along a positive direction of a Z axis of the screen, where the second optical noise includes direct lights, and the direct lights are part of the emitted lights travelling along a negative direction of the Z axis of the screen, where the first lights are emitted lights reflected by a fingerprint of a user. The processing unit 503 is configured to obtain a fingerprint image by collecting and processing the first lights in the effective collection region.

In implementations of the disclosure, the electronic device determines a second region of the screen to be lit-up and an effective collection region of the under-screen fingerprint module upon reception of a fingerprint collection instruction. Then the electronic device lights up the second region of the screen, where emitted lights of the second region are associated with first optical noise, second optical noise, and first lights, where the first optical noise includes reflected lights, the reflected lights are second lights reflected by the screen, and the second lights are part of the emitted lights travelling along a positive direction of a Z axis of the screen, where the second optical noise includes direct lights, and the direct lights are part of the emitted lights travelling along a negative direction of the Z axis of the screen, where the first lights are emitted lights reflected by a fingerprint of a user. The electronic device obtains a fingerprint image by collecting and processing the first lights in the effective collection region. As can be seen, the electronic device lights up only the second region, not a region of the screen corresponding to the effective collection region of the fingerprint module, which can effectively avoid influence of the first optical noise and the second optical noise on the fingerprint image when the fingerprint module collects the fingerprint image. In addition, only the first lights reflected to the effective collection region by the fingerprint are collected, which is beneficial to improving accuracy of the fingerprint image. Furthermore, the fingerprint image can be obtained directly after the first lights are obtained, without optical noise filtering, which is beneficial to increasing a speed of obtaining of the fingerprint image.

In some implementations, the determining unit 501 configured to determine the second region of the screen to be lit-up and the effective collection region of the under-screen fingerprint module is configured to: obtain a first contact region where a finger of the user contacts the screen; determine a collection region which corresponds to a first screen reference region including the first contact region as the effective collection region of the under-screen fingerprint module; and determine an annular region of the screen which surrounds a region including the first screen reference region as the second region, where an inner edge of the annular region encloses a surrounded region.

In some implementations, the determining unit 501 configured to determine the second region of the screen to be lit-up and the effective collection region of the under-screen fingerprint module is configured to: obtain a second contact region where a finger of the user contacts the screen; determine a collection region which corresponds to a second screen reference region including the second contact region as the effective collection region of the under-screen fingerprint module; and determine a non-annular separated region of the screen other than the second screen reference region as the second region, where emitted lights of the non-annular separated region include lights illuminating the second contact region.

In some implementations, the determining unit 501 configured to determine the second region of the screen to be lit-up and the effective collection region of the under-screen fingerprint module is configured to: obtain a third contact region where a finger of the user contacts the screen; determine a collection region which corresponds to a third screen reference region including the third contact region as the effective collection region of the under-screen fingerprint module; determine, according to the third contact region, a maximum reference region of the screen to be lit-up; and determine multiple separated regions in the maximum reference region as the second region, where emitted lights of each of the multiple separated regions include lights illuminating the third contact region.

In some implementations, the processing unit 503 is further configured to: after obtaining the fingerprint image by collecting and processing the first lights in the effective collection region, obtain a comparison result by performing fingerprint comparison on the fingerprint image, perform an unlocking operation on condition that the comparison result indicates that the fingerprint image matches, and skip performing of the unlocking operation on condition that the comparison result indicates that the fingerprint image does not match.

In some implementations, the processing unit 503 configured to perform the unlocking operation on condition that the comparison result indicates that the fingerprint image matches is configured to: determine the size of a region of a finger of the user illuminated by emitted lights of the second region of the screen to be lit-up; determine a target matching degree according to the size of the region; and perform the unlocking operation on condition that a matching degree indicated by the comparison result is greater than the target matching degree.

In some implementations, the lighting-up unit 502 is further configured to: before determining the second region of the screen to be lit-up and the effective collection region of the under-screen fingerprint module upon reception of the fingerprint collection instruction, detect a display state of the screen, and turn off the first region upon detecting that the display state of the screen is a screen-on state.

The determining unit 501 and the processing unit 503 may be a processor, and the lighting-up unit 502 may be a displayer.

FIG. 6 is a schematic structural diagram illustrating a smart phone 600 according to implementations. As illustrated in FIG. 6, the smart phone 600 includes a housing 610, a screen 620, and a main board 630. The main board 630 is provided with a camera 631, a processor 632, a memory 633, a power management chip 634, an under-screen fingerprint module 635, etc.

The smart phone 600 is configured to determine a second region of the screen to be lit-up and an effective collection region of the under-screen fingerprint module upon detecting a fingerprint collection instruction, where the second region includes at least one of an annular region, a non-annular separated region, and multiple separated regions, where the effective collection region is a collection region which corresponds to an unlit display region surrounded by an inner edge of the annular region, the effective collection region is a collection region which corresponds to a region of the screen other than the non-annular separated region, or the effective collection region is a collection region which corresponds to an unlit display region between at least two separated regions among the multiple separated regions. The smart phone 600 is configured to light up the second region of the screen, where emitted lights of the second region are associated with first optical noise, second optical noise, and first lights, where the first optical noise includes reflected lights, the reflected lights are second lights reflected by the screen, and the second lights are part of the emitted lights travelling along a positive direction of a Z axis of the screen, where the second optical noise includes direct lights, and the direct lights are part of the emitted lights travelling along a negative direction of the Z axis of the screen, where the first lights are emitted lights reflected by a fingerprint of a user. The smart phone 600 is configured to obtain a fingerprint image by collecting and processing the first lights in the effective collection region.

The processor 632 is a control center of the smart phone. The processor 632 is configured to connect various parts of the entire smart phone through various interfaces and lines, run or execute software programs and/or modules stored in the memory 633, and call data stored in the memory 633 to perform various functions of the smart phone and process data, thereby monitoring the smart phone as a whole. As an implementation, the processor 632 may include one or more processing units. As an example, the processor 632 integrates an application processor and a modem processor. The application processor is mainly configured to handle the operating system, user interfaces, application programs, and so on. The modem processor is mainly configured to process wireless communication. It can be understood that, the above-mentioned modem processor may not be integrated into the processor 632. The processor 632 may be, for example, a central processing unit (CPU), a general-purpose processor, a digital signal processor (DSP), an application-specific integrated circuit (ASIC), and a field programmable gate array (FPGA) or other programmable logic devices, a transistor logic device, a hardware component, or any combination thereof. The processor 632 is configured to implement or execute various exemplary logical blocks, modules, and circuits described in the disclosure. The processor may also be a combination for realizing computing functions, for example, including a combination of one or more microprocessors, a DSP, and microprocessor, and so on.

The memory 633 may be used to store software programs and modules. The processor 632 is configured to execute various function applications and data processing of the smart phone by running the software programs and the modules stored in the memory 633. The memory 633 mainly includes a program storing region and a data storing region. The program storing region may store the operating system, application programs required for at least one function and so on. The data storing region may store data created according to use of the smart phone, and so on. In addition, the memory 633 may include a highspeed random access memory (RAM), and may further include a non-transitory memory, such as at least one disk storage device, a flash device, or other transitory solid storage devices. The memory 633 may be, for example, a RAM, a flash memory, a read-only memory (ROM), an erasable programmable ROM (EPROM), and an electrically EPROM (EEPROM), a register, a hard disk, a mobile hard disk, CD-ROM, or any other form of storage medium known in the art.

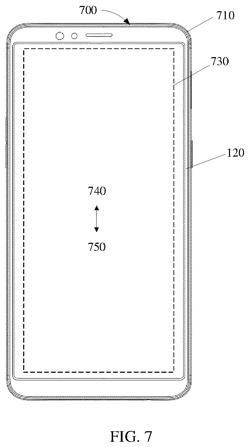

FIG. 7 is a schematic structural diagram illustrating an electronic device 700 according to implementations. As illustrated in FIG. 7, the electronic device 700 includes a housing 710, a screen 720 disposed on the housing 710, and a main board 730 disposed in the housing 710. The main board 730 is provided with a processor 740 and a memory 750, as illustrated in FIG. 2. An under-screen fingerprint module 760 is disposed under a first region of the screen 720. The processor 740 is configured to determine a second region 721 of the screen 720 to be lit-up and an effective collection region of the under-screen fingerprint module 760 upon reception of a fingerprint collection instruction, where the second region 721 includes at least one of an annular region, a non-annular separated region, and multiple separated regions, where the effective collection region is a collection region which corresponds to an unlit display region surrounded by an inner edge of the annular region, the effective collection region is a collection region which corresponds to a region of the screen 720 other than the non-annular separated region, or the effective collection region is a collection region which corresponds to an unlit display region between at least two separated regions among the multiple separated regions. The screen 720 is configured to light up the second region 721 of the screen 720, where emitted lights of the second region 721 are associated with first optical noise, second optical noise, and first lights, where the first optical noise includes reflected lights, the reflected lights are second lights reflected by the screen, and the second lights are part of the emitted lights travelling along a positive direction of a Z axis of the screen, where the second optical noise includes direct lights, and the direct lights are part of the emitted lights travelling along a negative direction of the Z axis of the screen, where the first lights are emitted lights reflected by a fingerprint of a user. The processor 740 is further configured to obtain a fingerprint image by collecting and processing the first lights in the effective collection region.

The screen 720 may include a display drive circuit, a display screen, and a touch screen. The display drive circuit is configured to control the display screen for display according to display data and display parameters (e.g., brightness, color, saturation, etc) of contents to be displayed. The screen includes a liquid crystal display (LCD) screen or an organic light-emitting diode (OLED) screen.

The main board 730 may be in any size and shape that the electronic device 700 can accommodate, which is not limited in the disclosure.

The under-screen fingerprint module 760 is disposed under the first region of the screen. The first region may be in various shapes, for example, an ellipse, a rectangle, etc., and the size of the first region is less than or equal to that of the screen 720, which are not limited in the disclosure.

The fingerprint collection instruction herein may be that a finger presses the screen when the screen is in a screen-off state, or may be a fingerprint payment instruction when the screen is in a screen-on state, etc., which is not limited in the disclosure.

The second region 721 does not overlap the effective collection region of the under-screen fingerprint module 760. Lights emitted by the lit-up second region 721 (hereinafter, emitted lights of the second region) includes lights that can reach a user's finger, which will be reflected by the user's finger to the effective collection region of the under-screen fingerprint module 760, to allow the under-screen fingerprint module to collect a fingerprint image. The second region 721 includes at least one of an annular region, a non-annular separated region, and multiple separated regions. The effective collection region corresponds to an unlit display region surrounded by an inner edge of the annular region, as illustrated in FIG. 3. The effective collection region corresponds to a region of the screen other than the non-annular separated region, as illustrated in FIG. 4. The effective collection region corresponds to an unlit display region between at least two separated regions among the multiple separated regions, as illustrated in FIG. 5.

A region of the screen 720 above the effective collection region of the under-screen fingerprint module 760 is in the screen-off state.

The first optical noise includes reflected lights which are part of the emitted lights of the second region 721 travelling along the positive direction of the Z axis of the screen and reflected by the screen. In other words, the first optical noise includes lights travelling along the negative direction of the Z axis of the screen, that is, downward lights of the second region 721 which are perpendicular to the screen. Since the second region 721 does not overlap the effective collection region of the under-screen fingerprint module, the first optical noise will not be collected and will not affect collection of the fingerprint image. In this way, the first optical noise can be eliminated.

The second optical noise includes direct lights which are part of the emitted lights of the second region 721 travelling along the negative direction of the Z axis of the screen, and the direct lights are also downward lights of the second region 721 which are perpendicular to the screen. Therefore, based on the same reason as the first optical noise, the second optical noise can be eliminated. As illustrated in FIG. 6, the first optical noise, the second optical noise, and the first lights are illustrated.

The processor 740 may include an application processor and a baseband processor. The processor 740 is a control center of the electronic device 700. The processor 740 is configured to connect various parts of the entire electronic device through various interfaces and lines. The processor 740 is configured to run or execute software programs and/or modules stored in the memory 750, and call data stored in the memory 750, to perform various functions of the electronic device 700 and process data, so as to monitor the electronic device 700 as a whole. The application processor is mainly configured to deal with the operating system, user interfaces, and application programs. The baseband processor is mainly configured to deal with wireless communication. It is understandable that, the baseband processor may not be integrated into the processor.

The memory 750 may be used to store software programs and modules. The processor 740 is configured to execute various functional applications and data processing of the electronic device 700 by running the software programs and modules stored in the memory 750. The memory 750 mainly includes a program storing region and a data storing region. The program storing region may store the operating system, application programs required for at least one function, and the like. The data storing region may store data created according to the use of the electronic device, etc. In addition, the memory 750 may include a highspeed random access memory, and may also include a non-transitory memory, such as at least one disk storage device, a flash device, or other transitory solid storage devices.

In implementations of the disclosure, the processor of the electronic device is configured to determine a second region of the screen to be lit-up and an effective collection region of the under-screen fingerprint module upon reception of a fingerprint collection instruction. Then the processor of the electronic device is configured to light up the second region of the screen, where emitted lights of the second region are associated with first optical noise, second optical noise, and first lights, where the first optical noise includes reflected lights, the reflected lights are second lights reflected by the screen, and the second lights are part of the emitted lights travelling along a positive direction of a Z axis of the screen, where the second optical noise includes direct lights, and the direct lights are part of the emitted lights travelling along a negative direction of the Z axis of the screen, where the first lights are emitted lights reflected by a fingerprint of a user. The processor of the electronic device is configured to obtain a fingerprint image by collecting and processing the first lights in the effective collection region. As can be seen, the electronic device lights up only the second region, not a region of the screen corresponding to the effective collection region of the fingerprint module, which can effectively avoid influence of the first optical noise and the second optical noise on the fingerprint image when the fingerprint module collects the fingerprint image. In addition, only the first lights reflected to the effective collection region by the fingerprint are collected, which is beneficial to improving accuracy of the fingerprint image. Furthermore, the fingerprint image can be obtained directly after the first lights are obtained, without optical noise filtering, which is beneficial to increasing a speed of obtaining of the fingerprint image.

In some implementations, the processor 740 configured to determine the second region of the screen 720 to be lit-up and the effective collection region of the under-screen fingerprint module 760 is configured to: obtain a first contact region where a finger of the user contacts the screen 720; determine a collection region which corresponds to a first screen reference region including the first contact region as the effective collection region of the under-screen fingerprint module; and determine an annular region of the screen which surrounds a region including the first screen reference region as the second region 721, where an inner edge of the annular region encloses a surrounded region.

An area of the first screen reference region including the first contact region is greater than or equal to that of the first contact region, and the area of the first screen reference region is less than a first preset area threshold. If the area of the first screen reference region is greater than the first preset area threshold, this will cause the second region 721 to be far from the finger of the user. In this case, the emitted lights of the second region 721 are unable to reach the finger to form a fingerprint image. For the same reason, an area of the surrounded region should be greater than or equal to that of the first screen reference region and less than a second preset area threshold.

The first preset area threshold and the second preset area threshold are values determined based on experience, and may be set by the technical developer according to multiple verified data before the electronic device leaves the factory, which are not limited in the disclosure.

As can be seen, in implementations of the disclosure, the processor of the electronic device can determine, according to the first contact region where the finger of the user contacts the screen, the effective collection region of the under-screen fingerprint module and the second region, which is conductive to improving accuracy of region determination. Moreover, the second region is designed to be circular, which is beneficial to improving integrity of the obtained fingerprint image.

In some implementations, the processor 740 configured to determine the second region 721 of the screen 720 to be lit-up and the effective collection region of the under-screen fingerprint module 760 is configured to: obtain a second contact region where a finger of the user contacts the screen 720; determine a collection region which corresponds to a second screen reference region including the second contact region as the effective collection region of the under-screen fingerprint module 760; and determine a non-annular separated region of the screen 720 other than the second screen reference region as the second region 721, where emitted lights of the non-annular separated region include lights illuminating the second contact region.

The non-annular separated region may be a half ring, a three-quarter ring, a half rectangle, or the like, which is not limited in the disclosure. The second screen reference region is designed in a same manner as the first screen reference region.

The specific implementation manners of determining the non-annular separated region of the screen 720 other than the second screen reference region as the second region 721 may be various. As an example, an area of a region of the screen to be lit-up is determined according to remaining electric quantity, and the non-annular separated region is determined according to the area of the region of the screen to be lit-up. In order to ensure integrity of the fingerprint image obtained after the non-annular separated region is lit up, under the promise of constant (area) size, the shape of the non-annular separated region should be designed to allow the non-annular separated region to enclose the second contact region as much as possible. In other words, the shape of the non-annular separated region should be designed to allow the emitted lights include as much as possible lights illuminating different positions of the second contact region rather than illuminating only one portion of the second contact region. As another example, the non-annular separated region is determined according to a damage state of the screen. It should be noted that, the manners of determining the non-annular separated region of the screen are not limited in the disclosure.

As can be seen, in implementations of the disclosure, the processor of the electronic device can determine, according to the second contact region where the finger of the user contacts the screen, the effective collection region of the under-screen fingerprint module and the second region, which is conductive to increasing diversity of the second region. In addition, the second region is designed to be a non-annular separated region, which can reduce power consumption compared to an annular region.

In some implementations, the processor 740 configured to determine the second region 721 of the screen 720 to be lit-up and the effective collection region of the under-screen fingerprint module 760 is configured to: obtain a third contact region where a finger of the user contacts the screen 720; determine a collection region which corresponds to a third screen reference region including the third contact region as the effective collection region of the under-screen fingerprint module 760; determine, according to the third contact region, a maximum reference region of the screen to be lit-up; and determine multiple separated regions in the maximum reference region as the second region 721, where emitted lights of each of the multiple separated regions include lights illuminating the third contact region.

In some implementations, the shape of each of the multiple separated regions includes at least one of a triangle, a rectangle, and a circle.

The multiple separated regions may have the same or different shapes. Any separated region can be, for example, a rectangle, a triangle, a circle, and so on, which is not limited in the disclosure. The third screen reference region is designed in a same manner as the first screen reference region.

The maximum reference region is a maximum region that can be determined as the second region 721. That is, emitted lights of a region of the screen other than the maximum reference region and the third screen reference region do not include lights illuminating the third contact region. The maximum reference region of the screen to be lit-up can be determined according to the third contact region in various manners. As an example, the maximum reference region is determined according to the position of the third contact region and a preset position relationship between the position of the third contact region and the maximum reference region, or determined according to a mapping relationship between an area of the third contact region and an area of the maximum reference region, which is not limited in the disclosure.

When the electronic device determines the multiple separated regions in the maximum reference region as the second region 721, distributions and shapes of the multiple separated regions are random each time, which can increase diversity of the determined regions.

As can be seen, in implementations of the disclosure, the processor 740 of the electronic device can determine, according to the third contact region where the finger of the user contacts the screen, the effective collection region of the under-screen fingerprint module and the second region, which is beneficial to determining the effective collection region and the second region accurately. In addition, the second region is designed to be multiple separated regions, which is beneficial to increasing diversity of the second region and bringing more entertainment to the user.

In some implementations, the processor 740 is further configured to: after obtaining the fingerprint image by collecting and processing the first lights in the effective collection region, obtain a comparison result by performing fingerprint comparison on the fingerprint image, perform an unlocking operation on condition that the comparison result indicates that the fingerprint image matches, and skip performing of the unlocking operation on condition that the comparison result indicates that the fingerprint image does not match.

During fingerprint comparison, if a matching degree between a fingerprint image and a preset fingerprint image is less than a preset matching-degree threshold, it is determined that the fingerprint image does not match. If the matching degree is greater than or equal to the preset matching-degree threshold, it is determined that the fingerprint image matches.

As can be seen, in implementations of the disclosure, the processor of the electronic device can perform fingerprint comparison on the fingerprint image and perform the unlocking operation when the comparison result indicates that the fingerprint image matches, which is beneficial to improving security of the electronic device.

In some implementations, the processor 740 configured to perform the unlocking operation on condition that the comparison result indicates that the fingerprint image matches is configured to: determine the size of a region of a finger of the user illuminated by emitted lights of the second region 721 of the screen to be lit-up; determine a target matching degree according to the size of the region; and perform the unlocking operation on condition that a matching degree indicated by the comparison result is greater than the target matching degree.

In the case that the second region 721 is an annular region, emitted lights of the second region can illuminate the entire fingerprint region of the finger. In the case that the second region 721 is a non-annular separated region, the emitted lights of the second region can illuminate part of the fingerprint region of the finger. That is, completeness of the obtained fingerprint image varies with the fingerprint region of the finger illuminated by the emitted lights. To this end, for each of different illuminated fingerprint regions, a target matching degree corresponding to the illuminated fingerprint region is determined.

As can be seen, in implementations of the disclosure, the processor of the electronic device can determine a target matching degree according to the size of a region of a finger of the user illuminated by emitted lights of the second region, which is beneficial to improving rationality and success rate of fingerprint image matching.

In some implementations, the processor 740 is further configured to detect a display state of the screen 720, before determining the second region 721 of the screen 720 to be lit-up and the effective collection region of the under-screen fingerprint module 760 upon reception of the fingerprint collection instruction. The screen 720 is configured to turn off the first region when the processor 740 detects that the display state of the screen is a screen-on state.

As can be seen, in implementations of the disclosure, the electronic device can detect a display state of the screen before determining the second region and the effective collection region. If the screen is in a full-screen on state, the first region of the screen (including a region corresponding to the effective collection region) is turned off, which is beneficial to eliminating of influence of the first optical noise and the second optical noise.

In some implementations, the under-screen fingerprint module 760 includes an optical fingerprint sensor and a collimation lens. The optical fingerprint sensor has a surface provided with an infrared radiation (IR) film or the collimation lens has a surface provided with the IR film.

The IR film is mainly used to block out the infrared light, but allow to pass the visible light. The IR film can be manufactured through optical coating.

As can be seen, in implementations of the disclosure, the IR film is provided on the surface of the optical fingerprint sensor or the collimation lens, which can filter the infrared light, thereby improving the quality of the collected fingerprint image.

According to implementations of the disclosure, a computer-readable storage medium is further provided. The computer-readable storage medium is configured to store a computer program for electronic data interchange. The computer program is operable with a computer to execute part or all of the operations of the method for fingerprint image processing of the foregoing method implementations. "Computer" referred to herein includes a mobile terminal.

According to implementations of the disclosure, a computer program product is further provided. The computer program product includes a non-transitory computer-readable storage medium configured to store a computer program. The computer program is operable with a computer to execute part or all of the operations of the method for fingerprint image processing of the foregoing method implementations. The computer program product may be a software installation package. "Computer" referred to herein includes a mobile terminal.

It is to be noted that, for the sake of simplicity, the foregoing method implementations are described as a series of action combinations, however, it will be appreciated by those skilled in the art that the disclosure is not limited by the sequence of actions described. That is because that, according to the disclosure, certain steps or operations may be performed in other order or simultaneously. Besides, it will be appreciated by those skilled in the art that the implementations described in the specification are exemplary implementations and the actions and modules involved are not necessarily essential to the disclosure.

In the foregoing implementations, the description of each implementation has its own emphasis. For the parts not described in detail in one implementation, reference may be made to related descriptions in other implementations.

In implementations of the disclosure, it should be understood that, the device/apparatus disclosed in implementations provided herein may be implemented in other manners. For example, the device/apparatus implementations described above are merely illustrative; for instance, the division of the unit is only a logical function division and there can be other manners of division during actual implementations, for example, multiple units or assemblies may be combined or may be integrated into another system, or some features may be ignored, omitted, or not performed. In addition, coupling or communication connection between each illustrated or discussed component may be direct coupling or communication connection, or may be indirect coupling or communication among devices or units via some interfaces, and may be electrical connection or other forms of connection.

The units described as separate components may or may not be physically separated, the components illustrated as units may or may not be physical units, that is, they may be in the same place or may be distributed to multiple network elements. Part or all of the units may be selected according to actual needs to achieve the purpose of the technical solutions of the implementations.

In addition, the functional units in various implementations of the disclosure may be integrated into one processing unit, or each unit may be physically present, or two or more units may be integrated into one unit. The above-mentioned integrated unit can be implemented in the form of hardware or a software function unit.

The integrated unit may be stored in a computer-readable memory when it is implemented in the form of a software functional unit and is sold or used as a separate product. Based on such understanding, the technical solutions of the disclosure essentially, or the part of the technical solutions that contributes to the related art, or all or part of the technical solutions, may be embodied in the form of a software product which is stored in a memory and includes instructions for causing a computer device (which may be a personal computer, a server, or a network device and so on) to execute all or part of the operations described in the various implementations of the disclosure. The memory includes various medium capable of storing program codes, such as a universal serial bus (USB), a ROM, a RAM, a mobile hard disk, Disk, compact disc (CD), or other medium that can store program codes.

It will be understood by those of ordinary skill in the art that all or a part of the various methods of the implementations described above may be accomplished by means of a program to instruct associated hardware, the program may be stored in a computer-readable memory, which may include a flash memory, a ROM, a RAM, Disk or CD, and so on.

While the principles and implementations of the disclosure have been described in connection with illustrative implementations, it is to be understood that foregoing implementations are merely used to help understand the method and the core idea of the disclosure. As will occur to those skilled in the art, the disclosure is susceptible to various modifications and changes without departing from the spirit and principle of the disclosure. Therefore, the disclosure is not to be limited to the disclosed implementations.

## Claims

1. A method for fingerprint image processing, for an electronic device comprising a screen and an under-screen fingerprint module disposed under a first region of the screen, comprising:
determining a second region of the screen and an effective collection region of the under-screen fingerprint module in response to a fingerprint collection instruction; the second region comprising at least one of an annular region, a non-annular separated region, and a plurality of separated regions; the effective collection region being a collection region which corresponds to an unlit display region surrounded by an inner edge of the annular region, the effective collection region being a collection region which corresponds to a region of the screen other than the non-annular separated region, or the effective collection region being a collection region which corresponds to an unlit display region between at least two separated regions among the plurality of separated regions;
lighting up the second region of the screen; emitted lights of the second region being associated with first optical noise, second optical noise, and first lights; the first optical noise comprising reflected lights, the reflected lights being lights reflected by the second lights from the screen, and the second lights being part of the emitted lights travelling along a positive direction of a Z axis of the screen; the second optical noise comprising direct lights, and the direct lights being part of the emitted lights travelling along a negative direction of the Z axis of the screen; the first lights being emitted lights reflected by a fingerprint of a user; and
obtaining a fingerprint image by collecting and processing the first lights in the effective collection region.

2. The method of claim 1, wherein determining the second region of the screen and the effective collection region of the under-screen fingerprint module comprises:
obtaining a first contact region where a finger of the user contacts the screen;
determining a collection region which corresponds to a first screen reference region comprising the first contact region as the effective collection region of the under-screen fingerprint module; and
determining an annular region of the screen which surrounds a region comprising the first screen reference region as the second region, wherein an inner edge of the annular region encloses a surrounded region.

3. The method of claim 1, wherein determining the second region of the screen and the effective collection region of the under-screen fingerprint module comprises:
obtaining a second contact region where a finger of the user contacts the screen;
determining a collection region which corresponds to a second screen reference region comprising the second contact region as the effective collection region of the under-screen fingerprint module; and
determining a non-annular separated region of the screen other than the second screen reference region as the second region, wherein emitted lights of the non-annular separated region comprise lights illuminating the second contact region.

4. The method of claim 1, wherein determining the second region of the screen and the effective collection region of the under-screen fingerprint module comprises:
obtaining a third contact region where a finger of the user contacts the screen;
determining a collection region which corresponds to a third screen reference region comprising the third contact region as the effective collection region of the under-screen fingerprint module;
determining, according to the third contact region, a maximum reference region of the screen to be lit-up; and
determining a plurality of separated regions in the maximum reference region as the second region, wherein emitted lights of each of the plurality of separated regions comprise lights illuminating the third contact region.

5. The method of any of claims 1 to 4, further comprising:
after obtaining the fingerprint image by collecting and processing the first lights in the effective collection region,
obtaining a comparison result by performing fingerprint comparison on the fingerprint image; performing an unlocking operation on condition that the comparison result indicates that the fingerprint image matches; and
skipping performing of the unlocking operation on condition that the comparison result indicates that the fingerprint image does not match.

6. The method of claim 5, wherein performing the unlocking operation on condition that the comparison result indicates that the fingerprint image matches comprises:
determining the size of a region of a finger of the user illuminated by emitted lights of the second region of the screen;
determining a target matching degree according to the size of the region; and
performing the unlocking operation on condition that a matching degree indicated by the comparison result is greater than the target matching degree.

7. The method of any of claims 1 to 6, further comprising:
before determining the second region of the screen and the effective collection region of the under-screen fingerprint module in response to the fingerprint collection instruction,
detecting a display state of the screen; and
turning off the first region upon detecting that the display state of the screen is a screen-on state.

8. A device for fingerprint image processing, for an electronic device comprising a screen and an under-screen fingerprint module disposed under a first region of the screen, comprising:
a determining unit, configured to determine a second region of the screen and an effective collection region of the under-screen fingerprint module in response to a fingerprint collection instruction; the second region comprising at least one of an annular region, a non-annular separated region, and a plurality of separated regions; the effective collection region being a collection region which corresponds to an unlit display region surrounded by an inner edge of the annular region, the effective collection region being a collection region which corresponds to a region of the screen other than the non-annular separated region, or the effective collection region being a collection region which corresponds to an unlit display region between at least two separated regions among the plurality of separated regions;
a lighting-up unit, configured to light up the second region of the screen; emitted lights of the second region being associated with first optical noise, second optical noise, and first lights; the first optical noise comprising reflected lights, the reflected lights being lights reflected by the second lights from the screen, and the second lights being part of the emitted lights travelling along a positive direction of a Z axis of the screen; the second optical noise comprising direct lights, and the direct lights being part of the emitted lights travelling along a negative direction of the Z axis of the screen; the first lights being emitted lights reflected by a fingerprint of a user; and
a processing unit, configured to obtain a fingerprint image by collecting and processing the first lights in the effective collection region.

9. An electronic device, comprising a processor, a screen, and an under-screen fingerprint module disposed under a first region of the screen;
the processor is configured to determine a second region of the screen and an effective collection region of the under-screen fingerprint module in response to a fingerprint collection instruction; the second region comprising at least one of an annular region, a non-annular separated region, and a plurality of separated regions; the effective collection region being a collection region which corresponds to an unlit display region surrounded by an inner edge of the annular region, the effective collection region being a collection region which corresponds to a region of the screen other than the non-annular separated region, or the effective collection region being a collection region which corresponds to an unlit display region between at least two separated regions among the plurality of separated regions;
the screen is configured to light up the second region of the screen; emitted lights of the second region being associated with first optical noise, second optical noise, and first lights; the first optical noise comprising reflected lights, the reflected lights being lights reflected by the second lights from the screen, and the second lights being part of the emitted lights travelling along a positive direction of a Z axis of the screen; the second optical noise comprising direct lights, and the direct lights being part of the emitted lights travelling along a negative direction of the Z axis of the screen; the first lights being emitted lights reflected by a fingerprint of a user; and
the processor is configured to obtain a fingerprint image by collecting and processing the first lights in the effective collection region.

10. The electronic device of claim 9, wherein the processor configured to determine the second region of the screen and the effective collection region of the under-screen fingerprint module is configured to:
obtain a first contact region where a finger of the user contacts the screen;
determine a collection region which corresponds to a first screen reference region comprising the first contact region as the effective collection region of the under-screen fingerprint module; and
determine an annular region of the screen which surrounds a region comprising the first screen reference region as the second region, wherein an inner edge of the annular region encloses a surrounded region.

11. The electronic device of claim 9, wherein the processor configured to determine the second region of the screen and the effective collection region of the under-screen fingerprint module is configured to:
obtain a second contact region where a finger of the user contacts the screen;
determine a collection region which corresponds to a second screen reference region comprising the second contact region as the effective collection region of the under-screen fingerprint module; and
determine a non-annular separated region of the screen other than the second screen reference region as the second region, wherein emitted lights of the non-annular separated region comprise lights illuminating the second contact region.

12. The electronic device of claim 9, wherein the processor configured to determine the second region of the screen and the effective collection region of the under-screen fingerprint module is configured to:
obtain a third contact region where a finger of the user contacts the screen;
determine a collection region which corresponds to a third screen reference region comprising the third contact region as the effective collection region of the under-screen fingerprint module;
determine, according to the third contact region, a maximum reference region of the screen to be lit-up; and
determine a plurality of separated regions in the maximum reference region as the second region, wherein emitted lights of each of the plurality of separated regions comprise lights illuminating the third contact region.

13. The electronic device of claim 12, wherein the shape of each of the plurality of separated regions comprises at least one of a triangle, a rectangle, and a circle.

14. The electronic device of any of claims 9 to 13, wherein the processor is further configured to:
after obtaining the fingerprint image by collecting and processing the first lights in the effective collection region,
obtain a comparison result by performing fingerprint comparison on the fingerprint image; perform an unlocking operation on condition that the comparison result indicates that the fingerprint image matches; and
skip performing of the unlocking operation on condition that the comparison result indicates that the fingerprint image does not match.

15. The electronic device of claim 14, wherein the processor configured to perform the unlocking operation on condition that the comparison result indicates that the fingerprint image matches is configured to:
determine the size of a region of a finger of the user illuminated by emitted lights of the second region of the screen;
determine a target matching degree according to the size of the region; and
perform the unlocking operation on condition that a matching degree indicated by the comparison result is greater than the target matching degree.

16. The electronic device of any of claims 9 to 15, wherein
the processor is configured to detect a display state of the screen, before determining the second region of the screen and the effective collection region of the under-screen fingerprint module in response to the fingerprint collection instruction; and
the screen is configured to turn off the first region when the processor detects that the display state of the screen is a screen-on state.

17. The electronic device of any of claims 9 to 16, wherein the under-screen fingerprint module comprises an optical fingerprint sensor and a collimation lens, and the optical fingerprint sensor has a surface provided with an infrared radiation, IR, film or the collimation lens has a surface provided with the IR film.

18. The electronic device of any of claims 9 to 17, wherein the screen comprises a liquid crystal display, LCD, screen or an organic light-emitting diode, OLED, screen.

19. An electronic device, comprising:
a processor;
a memory; and
one or more programs, stored in the memory and configured to be executed by the processor;
the programs comprising instructions which are operable with the processor to execute the method of any of claims 1 to 7.

20. A computer-readable storage medium, storing a computer program for electronic data interchange, the computer program being operable with a computer to execute the method of any of claims 1 to 7, the computer comprising an electronic device.
